# EUROPÄISCHE PATENTANMELDUNG

(11) **EP 3 181 597 A1**
(43) Veröffentlichungstag der Anmeldung: **21.06.2017**
(21) Anmeldenummer: 15200041.0
(22) Anmeldetag: 15.12.2015
(51) Int. Cl.: C08F 8/12, C08F 118/08, C08F 210/02, C08F 218/08, C08F 16/06

(54) **VERFAHREN ZUR HERSTELLUNG VON POLYVINYLALKOHOL UND EINES ETHYLEN-VINYLALKOHOL-COPOLYMERS**

(71) Anmelder: Evonik Degussa GmbH, 45128 Essen (DE)
(72) Erfinder: NISSEN, Felix, 48301 Nottuln (DE); REIMANN, Sebastian, 53111 Bonn (DE); JAMES, Phillip, SA70 7LE Tenby (GB)

(57) **Zusammenfassung**

Die vorliegende Erfindung betrifft ein Verfahren zur Herstellung eines polymeren Alkohols ausgewählt aus Polyvinylalkohol und Ethylen-Vinylakohol-Copolymer. Die Produkte dieses Verfahrens zeichnen sich im Vergleich zu den Produkten des Standes der Technik durch eine besonders hohe Farbstabilität aus.

## Beschreibung

Die vorliegende Erfindung betrifft ein Verfahren zur Herstellung eines Alkohols ausgewählt aus Polyvinylalkohol und Ethylenvinylalkohol. Die Produkte dieses Verfahrens zeichnen sich im Vergleich zu den Produkten des Standes der Technik durch eine besonders hohe Farbstabilität aus.

### Hintergrund der Erfindung

Polyvinylalkohol ist ein sehr wichtiger Kunststoff, der in vielen technischen Gebieten zur Anwendung kommt, etwa als Verdicker in Lacken, Haarsprays, Shampoos und Klebstoffen, Verpackungsmaterial, Kunstdarm oder als Textilfaser. Daneben findet es auch Anwendung im medizinischen Bereich (Marten, F. L. 2002. Vinyl Alcohol Polymers. Kirk-Othmer Encyclopedia of Chemical Technology, Seiten 1 bis 34).

Ethylenvinylalkohol hat einen ähnlichen Verwendungszweck: Es findet Anwendung als Barrierestoff, z.B. zur luftdichten Isolierung von Lebensmitteln.

Polyvinylalkohol und Ethylenvinylalkohol ähneln sich in ihrer chemischen Struktur. Polyvinylalkohol ist formal ein Polymer aus Monomereinheiten des Vinylalkohols und lässt sich chemisch durch die allgemeine Strukturformel -(CH₂-CHOH)ₙ- darstellen.

Ethylenvinylalkohol ist formal ein Copolymer des Vinylalkohols und des Ethens und umfasst in zufälliger Abfolge Monomereinheiten, welche von Ethen [-(CH₂-CH₂)ₙ-] sowie Vinylalkohol [-(CH₂-CHOH)ₙ-] abgeleitet sind.

Polyvinylalkohol wird üblicherweise aus Polyvinylacetat gewonnen, in dem die Acetatgruppen des Polyvinylacetats mit einer Base alkalisch verseift oder mit einem Alkoholat umgeestert werden.

Ein solches Verfahren ist im Stand der Technik beschrieben, z. B. in der US 2,862,916. Dieses Patent spricht auch ein bei der Verseifung bzw. Umesterung von Polyvinylacetatgruppen auftretendes Problem an:
Es wurde nämlich beobachtet, dass die bei der Umesterung erhaltenen Produkte nicht farbstabil sind und über die Zeit vergilben. Es wird in der US 2,862,916 vermutet, dass diese Gelbfärbung durch Aldehyde, die im Edukt Polyvinylacetat zu geringen Spuren vorliegen oder erst während der Umesterung gebildet werden, hervorgerufen wird. Dabei spielt insbesondere Acetaldehyd eine wichtige Rolle. Diese Gelbfärbung ist unerwünscht und kann gemäß der US 2,862,916 dadurch verhindert werden, dass man der Reaktionsmischung, in welcher die Umesterung stattfindet, bestimmte stabilisierende Additive zusetzt. Dies verhindert die Gelbfärbung des nach der Umesterung erhaltenen Polyvinylalkohols.

Obwohl mit Hilfe des Verfahrens gemäß US 2,862,916 ein farbstabileres Produkt erhalten werden kann, weist auch das in diesem Verfahren erhaltene Produkt eine Tendenz zur Gelbfärbung auf. Diese ist nach wie vor unerwünscht.

Ähnliche Probleme werden auch bei der Herstellung von Ethylenvinylalkohol aus dem entsprechenden Ethylenvinylacetat beobachtet.

Der vorliegenden Erfindung lag deshalb die Aufgabe zugrunde, ein Verfahren zur Verfügung zu stellen, mittels welchem Ethylenvinylalkohol bzw. Polyvinylalkohol, welche noch farbstabiler als jene mit dem Verfahren des Standes der Technik (US 2,862,916) gewonnenen sind, hergestellt werden können.

Es wurde nun überraschend ein Verfahren gefunden, welches diese Aufgabe löst.

### Detaillierte Beschreibung der Erfindung

Die vorliegende Erfindung betrifft demnach ein
Verfahren zur Herstellung eines polymeren Alkohols ausgewählt aus Polyvinylalkohol, Ethylenvinylalkohol umfassend die Schritte
a) Bereitstellen eines Polymers **P** ausgewählt aus Polyvinylacetat, Ethylenvinylacetat,
b) Zugabe einer Mischung **M** umfassend einen Stabilisator **S** und eine Base **B** zum Polymer **P**, wobei die Base **B** ausgewählt ist aus (Erd)alkalihydroxid, (Erd)alkalialkoholat, und wobei der Stabilisator **S** ausgewählt ist aus der Gruppe bestehend aus Ethylendiamin, Formaldehyd, Hydrazin, Hydroxylamin, Aminosäure, NH₂R' mit R' = Phenyl, Alkyl, Hydroxyalkyl,
c) Umsetzen der Mischung **M** mit dem Polymer **P,** wodurch der polymere Alkohol ausgewählt aus Polyvinylalkohol, Ethylenvinylalkohol erhalten wird.

Im Schritt a) des erfindungsgemäßen Verfahrens wird ein Polymer **P** ausgewählt aus Polyvinylacetat, Ethylenvinylacetat bereitgestellt.

"Bereitgestellt" kann in diesem Fall insbesondere im Sinne der Erfindung bedeuten, dass das Polymer **P** in einem Reaktor vorgelegt wird oder - insbesondere wenn das Verfahren kontinuierlich durchgeführt wird und das Polymer **P** in Lösung, insbesondere als alkoholische Lösung eingesetzt wird - als Reaktionsstrom eingesetzt wird.

Polyvinylacetat (CAS-Nummer: 9003-20-7) ist ein thermoplastischer Kunststoff, der durch radikalische Homopolymerisation von Vinylacetat zugänglich ist.

Ethylenvinylacetat (anderer Name "Ethylen-Vinylacetat-Copolymer") ist ein Copolymer aus Ethen und Vinylacetat. Insbesondere beträgt erfindungsgemäß der Ethengehalt in Ethylenvinylacetat zwischen 30 und 70 Gewichts-%, bevorzugt zwischen 40 bis 70 Gew.-%.

In einer bevorzugten Ausführungsform wird das Polymer **P** dabei als alkoholischen Lösung, insbesondere in einem Alkohol ausgewählt aus Methanol, Ethanol, besonders bevorzugt in Methanol, eingesetzt. Dabei liegt der Anteil des Polymers **P** in dieser alkoholischen Lösung insbesondere bei 5 - 90 Gew.-%, bevorzugt bei 10 - 75 Gew.-%, bevorzugter bei 25 - 50 Gew.-%.

Im Schritt b) des erfindungsgemäßen Verfahrens wird zum Polymer **P** dann eine Mischung **M** zugegeben.

Die Mischung **M** umfasst zwei Komponenten, nämlich einen Stabilisator **S** und eine Base **B.** Die Base **B** ist ausgewählt aus der Gruppe bestehend aus (Erd)alkalialkoholat, (Erd)alkalihydroxid. "(Erd)alkalihydroxid" bedeutet erfindungsgemäß "Alkalihydroxid oder Erdalkalihydroxid". Ein "(Erd)alkalihydroxid" ist erfindungsgemäß insbesondere ein Alkalihydroxid und bevorzugt ausgewählt aus Natriumhydroxid, Kaliumhydroxid, besonders bevorzugt Natriumhydroxid.

"(Erd)alkalialkoholat" bedeutet erfindungsgemäß "Alkalialkoholat oder Erdalkalialkoholat", wobei das Alkoholat jeweils insbesondere 1 bis 4, bevorzugter 1 bis 2 Kohlenstoffatome aufweist.

Die Base **B** ist bevorzugt ein (Erd)alkalialkoholat, bevorzugter ein Alkalialkoholat und noch bevorzugter ausgewählt aus der Gruppe bestehend aus Natriummethylat (NaOCH₃), Natriumethylat (NaOCH₂CH₃), Kaliummethylat (KOCH₃), noch mehr bevorzugter ausgewählt aus der Gruppe bestehend aus Natriummethylat (NaOCH₃), Kaliummethylat (KOCH₃), besonders bevorzugt ist die Base **B** NaOCH₃.

Die Base **B** hat die Funktion, die Umesterung bzw. die Verseifung der Acetatgruppen des Polyvinylacetats bzw. Ethylenvinylacetats zu katalysieren.

Die Mischung **M** umfasst neben der Base **B** auch einen Stabilisator **S.** Dieser Stabilisator **S** ist ausgewählt aus der Gruppe bestehend aus Ethylendiamin, Formaldehyd, Hydrazin, Hydroxylamin, Aminosäure, NH₂R' mit R' = Phenyl, Alkyl, Hydroxyalkyl.

R' ist dabei insbesondere ausgewählt aus der Gruppe bestehend aus Phenyl, Alkyl mit 1 bis 4 Kohlenstoffatomen, Hydroxyalkyl mit 1 bis 4 Kohlenstoffatomen. R' ist bevorzugt ausgewählt aus der Gruppe bestehend aus Phenyl, Methyl, Ethyl, Hydroxymethyl, 1-Hydroxyethyl, 2-Hydroxyethyl. R' ist bevorzugter ausgewählt aus der Gruppe bestehend aus Methyl, Ethyl.

Bei der Aminosäure handelt es sich bevorzugt um eine Aminosäure ausgewählt aus der Gruppe bestehend aus Alanin, Arginin, Asparagin, Asparaginsäure, Cystein, Glutamin, Glutaminsäure, Glycin, Histidin, Isoleucin, Leucin, Lysin, Methionin, Phenylalanin, Prolin, Serin, Threonin, Tryptophan, Tyrosin, Valin, bevorzugter um eine Aminosäure ausgewählt aus der Gruppe bestehend aus Methionin, Glycin, Alanin, am bevorzugtesten um eine Aminosäure ausgewählt aus Methionin, Glycin, am allerbevorzugtesten um Glycin.

Formaldehyd kann dabei insbesondere als wässrige Lösung, als Formalin oder als Paraformaldehyd, besonders bevorzugt als Paraformaldehyd, eingesetzt werden.

Insbesondere ist der Stabilisator **S** ausgewählt aus Ethylendiamin, Glycin, Ethanolamin. Bevorzugt ist der Stabilisator **S** ausgewählt aus Ethylendiamin, Glycin, besonders bevorzugt handelt es sich bei dem Stabilisator **S** um Ethylendiamin.
Im Unterschied zu den Verfahren des Standes der Technik wird die Base **B** und der Stabilisator **S** dem Polymer **P** nicht nacheinander, sondern gleichzeitig als Mischung **M** zugegeben. Völlig überraschend wurde beobachtet, dass dies zu den Verfahrensprodukten Polyvinylalkohol oder Ethylenvinyalkohol mit einer Farbstabilität führt, welche noch höher ist als die Farbstabilität des mit den Verfahren des Standes der Technik hergestellten Polyvinylalkohols.

Die Mischung **M** kann insbesondere als wässrige oder alkoholische Lösung zugegeben werden.

Es wird in Schritt b) bevorzugt so viel Mischung **M** zugegeben, dass das Verhältnis des Gesamtgewichts von **B** zum Gesamtgewicht von **P** im Bereich 1 : 490 bis 1 : 4.1, bevorzugter im Bereich 1 : 100 bis 1 : 24 liegt.

Wenn die Base **B** ein (Erd)alkalialkoholat ist, wird die Mischung **M** insbesondere als alkoholische Lösung eingesetzt, noch bevorzugter als alkoholische Lösung des Alkohols, der das Alkoholat des (Erd)alkalialkoholats bildet. Noch bevorzugter beträgt der Anteil der Base **B** in der Mischung **M** dann 1 bis 32 Gew.-%, noch bevorzugter 5 bis 30 Gew.-%, noch mehr bevorzugter 6 bis 21 Gew.-%, am bevorzugtesten 8 bis 10 Gew.-%. In dieser Ausführungsform ist deren Wassergehalt dann noch bevorzugter < 10 Gew.-%, noch bevorzugter < 1 Gew.-%, noch bevorzugter < 0.1 Gew.-%, noch bevorzugter < 0.01 Gew.-%.

Wenn die Base **B** ein (Erd)alkalihydroxid ist, ist die Mischung **M** bevorzugt eine wässrige oder alkoholische Lösung (wobei "alkoholisch" in diesem Fall bevorzugt "methanolisch oder ethanolisch", noch bevorzugter "methanolisch" bedeutet), ganz besonders bevorzugt aber eine wässrige Lösung.

Das Verhältnis der Base **B** und des Stabilisators **S** in der Mischung **M** ist nicht besonders beschränkt. Das Verhältnis des Gesamtgewichts aller Basen **B** zum Gesamtgewicht aller Stabilisatoren **S** in der Mischung **M** liegt insbesondere im Bereich 10000 : 1 bis 5 : 1, bevorzugt 1000 : 1 bis 10 : 1, besonders bevorzugt im Bereich 588 : 1 bis 100 : 1.

Wenn das Polymer **P** in Schritt a) als alkoholische Lösung bereitgestellt wird und die Mischung **M** als alkoholische Lösung eingesetzt wird, ist bevorzugt dieser Alkohol aus der alkoholischen Lösung des Polymers **P** und der Alkohol der alkoholischen Lösung von **M** gleich.

In Schritt c) wird dann die Mischung **M** mit dem Polymer **P** umgesetzt. Dabei kommt es zur Verseifung [falls es sich bei der Base **B** um ein (Erd)alkalihydroxid handelt] oder Umesterung [falls es sich bei der Base **B** um ein (Erd)alkalialkoholat handelt] der Acetatgruppen des Polymers **P** durch die Base **B.** Diese Verseifung oder Umesterung setzt im Regelfall automatisch ein, wenn die Mischung **M** zum Polymer **P** in Schritt b) des erfindungsgemäßen Verfahrens zugegeben wird und benötigt keine weitere Aktivierung. Es kann jedoch während Schritt c) erwärmt werden, um die Verseifung bzw. Umesterung zu beschleunigen oder andere im Stand der Technik beschriebene Methoden zur Aktivierung genutzt werden.

Nach Ende des Schrittes c) wird dann das gewünschte Produkt Polyvinylalkohol oder Ethylenvinyalkohol erhalten, welches sich durch überraschend hohe Farbstabilität auszeichnet. Dieses kann durch dem Fachmann geläufige Verfahren weiter gereinigt und getrocknet werden. Die nachfolgenden Beispiele sollen die vorliegende Erfindung erläutern, ohne diese darauf einzuschränken.

### Beispiele

### 1. Vergleichsbeispiele V1 - V3

48 g einer 25 Gew-%igen Lösung von Polyvinylacetat in wasserfreiem Methanol wurden jeweils bei jedem der Versuche **V1, V2, V3** bei 50 °C in einem Rührkessel vorgelegt.

Der Lösung wurden dann folgende Substanzen zugefügt und verrührt:
Im Versuch **V1** wurden zunächst 50 mg Ethylendiamin, gefolgt von 9.8 g 30 Gew.-%ige NaOCH₃ in Methanol zugefügt.
Im Versuch **V2** wurden zunächst 50 mg Glycin, gefolgt von 9.8 g 30 % Gew.-%ige NaOCH₃ in Methanol zugefügt.
Im Versuch **V3** wurden 9.8 g 30 %ige NaOCH₃ in Methanol zugefügt.

Nach der jeweiligen Zugabe verfestigte sich die Reaktionslösung, was den Umsatz zu Polyvinylalkohol zeigt.

Danach wurden die erhaltenen Mischungen für 15 Stunden bei 50 °C gelagert.

### 2. Erfinderische Beispiele E1, E2

48 g einer 25 Gew-%igen Lösung von Polyvinylacetat in wasserfreiem Methanol wurden jeweils bei jedem der Versuche **E1, E2** bei 50 °C in einem Rührkessel vorgelegt.

Der Lösung wurden dann folgende Substanzen zugefügt und verrührt:
Im Versuch **E1** wurde eine Mischung aus 50 mg Ethylendiamin und 9.8 g 30 Gew.-% ige NaOCH₃ in Methanol zugefügt.
Im Versuch **E2** wurde eine Mischung aus 50 mg Glycin und 9.8 g 30 Gew.-% ige NaOCH₃ in Methanol zugefügt.

Nach der jeweiligen Zugabe verfestigte sich die Reaktionslösung, was den Umsatz zu Polyvinylalkohol zeigt.

Danach wurden die erhaltenen Mischungen für 15 Stunden bei 50 °C gelagert.

### 3. Photometrische Bestimmungen

Die in den Versuchen **V1, V2, V3, E1, E2** gelagerten Festkörper wurden jeweils in 100 g einer 3 : 1 Mischung von Wasser und Methanol unter Rückfluss bei 80°C gelöst. Die Lösungen wurden mit einer 3 : 1 Mischung von Wasser und Methanol auf 250 ml aufgefüllt. Die so erhaltenen Mischungen wurden über einen Filter mit 0.2 µm Porengröße filtriert. Danach wurde die Jodfarbzahl der jeweiligen Mischung gemäß DIN 6162 bestimmt.

Die Ergebnisse der photometrischen Bestimmungen sind in der folgenden Tabelle gezeigt:

| | Blindprobe **(V3)** | **V1** | **V2** | **E1** | **E2** |
|---|---|---|---|---|---|
| Stabilisator | - | Ethylendiamin | Glycin | Ethylendiamin | Glycin |
| Jodfarbzahl Gemäß Din 6162 | 11.3 | 7.1 | 6.9 | 4.8 | 5.7 |

Aus der Tabelle ist klar ersichtlich, dass bei den gemäß **E1** und **E2** erhaltenen Polyvinylalkoholproben kleinere Jodfarbzahl (und damit ein geringerer Vergilbungseffekt) beobachtet wurden als bei den aus den Versuchen gemäß **V1** bzw. **V2** erhaltenen Proben. Dies zeigt, dass beim Vorgehen nach **E1** und **E2** ein Polyvinylalkohol mit besonders guter Farbstabilität erhalten werden konnte. Dieses Ergebnis ist völlig überraschend.

Ein entsprechendes Ergebnis ist auch mit Ethylenvinylalkohol erhältlich.

## Patentansprüche

1. Verfahren zur Herstellung eines polymeren Alkohols ausgewählt aus Polyvinylalkohol, Ethylenvinylalkohol umfassend die Schritte
a) Bereitstellen eines Polymers **P** ausgewählt aus Polyvinylacetat, Ethylenvinylacetat,
b) Zugabe einer Mischung **M** umfassend einen Stabilisator **S** und eine Base **B** zum Polymer **P,**
wobei die Base **B** ausgewählt ist aus (Erd)alkalihydroxid, (Erd)alkalialkoholat,
und wobei der Stabilisator **S** ausgewählt ist aus der Gruppe bestehend aus Ethylendiamin, Formaldehyd, Hydrazin, Hydroxylamin, Aminosäure, NH₂R' mit R' = Phenyl, Alkyl, Hydroxyalkyl,
c) Umsetzen der Mischung **M** mit dem Polymer **P,** wodurch der polymere Alkohol ausgewählt aus Polyvinylalkohol, Ethylenvinylalkohol erhalten wird.

2. Verfahren nach Anspruch 1, wobei in Schritt a) das Polymer **P** als alkoholische Lösung eingesetzt wird.

3. Verfahren nach Anspruch 1 oder 2, wobei **B** ein (Erd)alkalialkoholat ist.

4. Verfahren nach einem der Ansprüche 1 bis 3, wobei die Mischung **M** eine alkoholische Lösung ist.

5. Verfahren nach einem der Ansprüche 1 bis 4, wobei in Schritt b) so viel Mischung **M** zugegeben wird, dass das Verhältnis des Gesamtgewichts von **B** zum Gesamtgewicht von **P** im Bereich 1 : 490 bis 1 : 4.1 liegt.

6. Verfahren nach einem der Ansprüche 1 bis 5, wobei das Verhältnis des Gesamtgewichts aller Basen **B** zum Gesamtgewicht aller Stabilisatoren **S** in der Mischung **M** im Bereich 10000 : 1 bis 5 : 1 liegt.

7. Verfahren nach einem der Ansprüche 1 bis 6, wobei das Polymer **P** Polyvinylacetat ist.
